# EUROPEAN PATENT SPECIFICATION

(11) **EP 2 291 333 B1**
(45) Date of publication and mention of the grant of the patent: **27.02.2013**
(21) Application number: 09769101.8
(22) Date of filing: 02.06.2009
(51) Int. Cl.: B01D 1/00, C02F 1/14, F01K 17/04

(54) **PROCESS FOR REDUCING BULKING SLUDGE IN ACTIVATED SLUDGE WASTEWATER TREATMENT**
VERFAHREN ZUR VERRINGERUNG VON SCHLAMMANSAMMLUNGEN BEI DER AKTIVEN SCHLAMMABWASSERBEHANDLUNG
PROCÉDÉ DE RÉDUCTION DE LA BOUE FOISONNANTE LORS DU TRAITEMENT DE L'EAU USÉE PAR BOUES ACTIVÉES

(30) Priority: 26.06.2008 EP 08159097; 27.06.2008 US 76340 P
(43) Date of publication of application: 09.03.2011
(73) Proprietor: Akzo Nobel N.V., 6824 BM Arnhem (NL)
(72) Inventor: GEERTS, Roy, NL-6708 RC Wageningen (NL); VAN GINKEL, Cornelis, Gijsbertus, NL-6705 CP Wageningen (NL); O, Boen, Ho, NL-3514 CW Utrecht (NL); REEDIJK, Marianne, Frederika, NL-4051 BL Ochten (NL); MIDDELHUIS, Benno, NL-6811 HA Arnhem (NL)
(74) Representative: Alferink, Petrus J.T.
(86) International application number: PCT/EP2009/056753
(87) International publication number: WO 2009/156252

(56) References cited:
- EP-A- 0 650 931
- WO-A-99/51533
- WO-A-02/076894
- AU-B2- 623 787
- US-A- 4 341 632
- US-A- 5 286 386
- US-A- 5 364 529
- US-A1- 2003 052 059

## Description

The present invention relates to a process for reducing the bulking sludge in activated sludge plants for wastewater treatment. The invention furthermore relates to a composition and to the use of said composition in wastewater treatment.

Sewage and industrial wastewaters can be treated in activated sludge plants. The process is usually as follows. Atmospheric air or pure oxygen is bubbled through primary treated sewage or industrial wastewater combined with micro-organisms to develop a biological floc (the so-called Activated Sludge) which reduces the organic carbon, nitrogen, and phosphorus content of the wastewater. The combination of raw sewage or industrial wastewater and biological mass is commonly known as Mixed Liquor Suspended Solids (MLSS). In all activated sludge plants, once the sewage or industrial wastewater has received sufficient treatment, the treated MLSS is passed into settling tanks (clarifiers) and the clarified effluent is run off and optionally undergoes further treatment. Part of the settled Suspended Solids is returned to the aeration system to re-seed the new sewage or industrial wastewater entering the tank. This fraction is called Return Activated Sludge (R.A.S.). Excess sludge which eventually accumulates beyond what is returned is called Waste Activated Sludge (W.A.S.). W.A.S is removed from the treatment process to keep the ratio of biomass to food supplied (sewage or wastewater) or the sludge retention time in balance.

Despite decades of progress and operation, serious operating problems still occur with the activated sludge process. One major problem is the regular occurrence of excessive growth of filamentous bacteria, a phenomenon known as "filamentous bulking sludge" or simply "bulking sludge". Filamentous organisms extend from the flocs into the bulk solution, resulting in poor settability of the activated sludge, which may lead to activated sludge being carried over in the effluent from the clarifier.

Different methods have been developed in the past to fight bulking sludge. In EP 650 931, for example, a method is described for preventing activated sludge from losing its settling ability by adding either
(a) a non-ionic and/or an anionic surfactant
(b) a combination of a non-ionic surfactant with a cationic surfactant of a form of a quaternary ammonium salt, or
(c) a combination of a non-ionic surfactant and a cationic surfactant of a form of a quaternary ammonium salt with a cationic organic flocculant,
to the activated sludge treatment system.

Seka et al. disclose in Wat. Res. Vol. 35, No. 12, pp. 2995-3003, entitled "Feasibility of a multi-component additive for efficient control of activated sludge Filamentous bulking*"* that bulking sludge can be controlled by quaternary ammonium compounds.

US 5,364,529 discloses a wastewater treatment system which includes (a) two chambers in which microbiological cultures grow aerobically, (b) a float sludge separator, and (c) an activated sludge separator. It mentions that in a preferred embodiment, an aqueous solution comprising a ferric salt is added, along with flocculating or coagulating agent required to form the float sludge, to the culture in the float-sludge separator. It discloses that addition of a ferric salt has the effect of reducing the phosphate concentrations in the effluent from the float-sludge separator and the effluent, which is treated wastewater, from the second chamber in comparison with the phosphate concentration in the first aerobic culture that flows into the float-sludge separator.

It is an object of the present invention to provide an efficient method for reducing bulking sludge in activated sludge wastewater treatment plants.

The objective is realized with the process of the present invention wherein an iron(II) or iron(III) salt and at least one fatty amine or fatty amine derivative as defined in claim 1 are used.

Generally, in the process according to the present invention, a wastewater to be treated is contacted with micro-organisms. The term wastewater in this respect is meant to denote any aqueous stream that carries wastes from households, businesses, and industries and that is not suitable for reuse or is not allowed to be discharged unless treated by a wastewater facility. Air or oxygen is bubbled through so that a biological floc is formed, the activated sludge. This can be done in a tank, often denoted as aeration tank. As mentioned before, a mixture of wastewater and activated sludge is generally denoted as MLSS. Subsequently, the MLSS is passed into one or more clarifiers. Part of the settled activated sludge, i.e. the R.A.S., is reused by contacting it with wastewater still to be treated. The iron(II) or iron (III) salt and the at least one fatty amine or fatty amine derivative according to the invention are preferably added to the return activated sludge, to mixed liquor suspended solids in the aeration tank, to wastewater to be treated (so prior to the contacting step with micro-organisms), to a settling tank or any combination thereof.

It is noted that AU 623787 discloses to an industrial effluent treatment process which is characterized in that it comprises the steps of:
(a) adding a coagulant to the effluent to concentrate the organic material therein,
(b) treating the thus concentrated organic material with a mixture of a cationic polymer or copolymer in the presence of an anionic surfactant, a non-ionic surfactant or both,
(c) separating the organic material from the effluent by flotation.

The coagulant can be alum, lime, magnesium salts or ferric salts, for example ferric chloride. The non-ionic surfactant can be, amongst others, a fatty amine ethoxylate.

Reduction of bulking sludge and the specific combination of an iron(II) or iron(III) salt and at least one fatty amine (derivative) is, however, not disclosed in this document.

The fact that the process according to the present invention wherein an iron(II) or iron(III) salt is used in combination with a fatty amine or fatty amine derivative leads to improved settability of the activated sludge, results in a few additional advantages. For example, the activated sludge plant will have an improved performance due to an increased sludge retention time. In more detail, in activated sludge plants, wastewater that has been treated in an aeration tank is separated from the suspended solids (*i.e*. activated sludge) by the process of gravity sedimentation in clarifiers. Activated sludge flocs settle toward the bottom of the clarifier in a quiescent environment. This separation leads ideally to the formation of an effluent (wastewater having low levels of suspended solids) in the upper portion of the clarifier and a thickened sludge in the bottom portion of the clarifier. Part of the thickened sludge is returned to the aeration tank (R.A.S.). The higher the part returned to the aeration tank, the higher the so-called Sludge Retention Time (SRT) in the plant. Obviously, good settability of the activated sludge will allow operation at increased SRT. Hence, because the use of the combination of FeCl₃ and at least one fatty amine or fatty amine derivative in an activated sludge plant will have the effect of improved settability of the activated sludge, the performance of activated sludge plants can be improved.

One of the major drawbacks of activated sludge treatment in general is excess sludge production. It is well known that increasing the SRT or reducing the sludge loading rate will lead to a reduction of excess sludge production. This inverse relationship arises from the concept of maintenance energy, where most of the incoming energy, i.e. the reduced (in)organic compounds, is used for cell maintenance such as maintaining the internal osmotic condition, pH, mobility, etc. Increased cell lyses and cryptic growth may also contribute to low sludge yield at high SRT. By increasing the suspended solids concentration in the activated sludge treatment system it would theoretically be possible to reach a situation in which the amount of energy provided in the form of (in)organic substances equals the maintenance energy. In consequence, maintenance of high suspended solid concentrations in the bioreactor, thereby increasing the SRT, reduces the excess activated sludge production. Limitation of the increase in suspended solids concentrations in activated sludge plants primarily stems from the settability of the activated sludge. As described above, the settability of the activated sludge is improved by the addition of a combination of FeCl₃ and at least one fatty amine or fatty amine derivative, allowing maintenance of higher suspended solids concentrations in activated sludge treatment systems and thus generating less excess sludge production.

Excess sludge of biological treatment plants is usually dewatered by filtration or centrifugation to suspended solids contents in excess of fifty percent by weight. The costs of this process are also determined by the dewaterability of the sludge. The dewaterability of sludge is reduced when settling of the sludge mass becomes difficult. Poor dewaterability in centrifuges and belt presses is therefore often associated with the settability of activated sludge. Improving the settability of activated sludge through the addition of FeCl₃ with fatty amine therefore also improves handling of the excess sludge (reduces the cost of dewatering sludge).

It was furthermore found that the combination of an iron salt and at least one fatty amine or fatty amine derivative is effective against more types of micro-organisms than PAC (polyaluminium chloride), and that foaming is reduced.

The iron salt to be used in the process according to the present invention is preferably selected from the group consisting of FeCl₃, FeCl₂, Fe(SO₄), FeCl(SO₄), Fe(NO₃)₂, and Fe(NO₃)₃. Of this group, Fe(NO₃)₂ and Fe(NO₃)₃ are the least preferred, because in many cases it is less preferred to introduce nitrogen into activated sludge plants for wastewater treatment. More preferably, an iron(III) salt is used. This is because if an iron(III) salt is used, a lower dosage can be used to achieve the same effects as for iron(II), due to the fact that phosphates, which are present in the waste water, will bind to iron(II). Furthermore, the coagulation efficiency of iron(III) salts is much higher than the coagulation efficiency of iron(II). To achieve sufficient coagulation efficiency for iron(II) salts, at least part of the iron(II) has to react with oxygen, forming iron(III). Hence, if a short aeration step is present in the process, it is preferred to use an iron(III) salt. Finally, iron(III) salts can be used over a broader pH range than iron(II) salts. Most preferably, FeCl₃ is used.

The term fatty amine as used throughout the description is meant to denote a primary amine, a secondary amine, or a tertiary amine with at least one fatty alkyl chain, with a fatty alkyl chain being a saturated or unsaturated carbon chain containing 8 to 24 carbon atoms, preferably containing 10 to 22 carbon atoms, and most preferably containing 12 to 20 carbon atoms. The fatty amine may comprise more than one amine moiety. Other substituents attached to the amine nitrogen can for example be an alkyl group such as methyl or ethyl.
It is also possible that other substituents than an alkyl group are attached to the amine group nitrogen. In that case, the compound is denoted throughout the description as a fatty amine derivative. Said other substituent is selected from the group consisting of substituents comprising an aromatic group, such as a benzyl group; hydroxylated alkyl groups, such as a hydroxyethyl group; polyoxyethylene groups; aminoalkyl groups; and carboxylated alkyl groups such as a carboxymethyl group.

Preferred is the use of a fatty amine or a fatty amine derivative comprising one or more aminoalkyl groups. Suitable fatty amines and fatty amine derivatives comprising one or more aminoalkyl groups that can be used in the process according to the present invention are (fatty alkyl)monoamines according to the formula R1NH₂, wherein R1 is an aliphatic group having 8-24, preferably 10-22 carbon atoms; (fatty alkyl) diamines according to the formula R2NHCH₂CH₂CH₂NH₂, wherein R2 is an aliphatic group having 8-24, preferably 10-22 carbon atoms; and linear (fatty alkyl)triamines according to the formula R3NHCH₂CH₂CH₂NHCH₂CH₂CH₂NH₂, wherein R3 is an aliphatic group having 6-24, preferably 8-22 carbon atoms.

Suitable fatty amines are primary, secondary or tertiary fatty amines such as n-decyl amine, n-dodecyl amine, (coco alkyl)amine, n-tetradecyl amine, n-hexadecyl amine, n-octadecyl amine, oleyl amine, (tallow alkyl)amine, (rapeseed alkyl)amine, (soya alkyl)amine, erucyl amine, (coco alkyl)amine, N-(n-decyl)-trimethylene diamine, N-(n-dodecyl)-trimethylene diamine, N-(coco alkyl)-trimethylene diamine, N-(oleyl alkyl)-trimethylene diamine, N-(rapeseed alkyl)-trimethylene diamine, N-(soya alkyl)-trimethylene diamine, N-(tallow alkyl)-trimethylene diamine, N-erucyl trimethylene diamine, N-(n-decyl)-N'-(3-aminopropyl)-1,3-propane diamine, N-(n-dodecyl)-N'-(3-aminopropyl)-1,3-propane diamine, oleyl-1,3-diaminopropane, N-(coco alkyl)-N'-(3-aminopropyl)-1,3-propane diamine, N-(rapeseed alkyl)-N'-(3-aminopropyl)-1,3-propane diamine, N-(soya alkyl)-N'-(3-aminopropyl)-1,3-propane diamine, N-oleyl-N'-(3-aminopropyl)-1,3-propane diamine, N-(tallow alkyl)-N'-(3-aminopropyl)-1,3-propane diamine, N-erucyl-N'-(3-aminopropyl)-1,3-propane diamine, N-(3-aminopropyl)-N'-[3-(9-decylamino)propyl]-1,3-propane diamine, N-(3-aminopropyl)-N'-[3-(9-dodecylamino)propyl]-1,3-propane diamine, N-(3-aminopropyl)-N'-[3-(9-(coco alkyl)amino)propyl]-1,3-propane diamine, N-(3-aminopropyl)-N'-[3-(9-(rapeseed alkyl)amino)propyl]-1,3-propane diamine, N-(3-aminopropyl)-N'-[3-(9-(soya alkyl)amino)propyl]-1,3-propane diamine, N-(3-aminopropyl)-N'-[3-(9-octadecenylamino)propyl]-1,3-propane diamine, N-(3-aminopropyl)-N'-[3-(9-(tallow alkyl)amino)propyl]-1,3-propane diamine, and N-(3-aminopropyl)-N'-[3-(9-erucylamino)propyl]-1,3-propane diamine.

Secondary dialkyl amines such as di-n-decylamine and bis(n-decyl)amine can also be used. An example of a secondary methylalkylamine is (coco alkyl)methylamine.
An example of a tertiary trialkylamine is tri(coco alkyl)amine. An example of a tertiary dialkylmethylamine is di(coco alkyl)methylamine. An example of a tertiary alkyldimethylamine is (coco alkyl)dimethylamine.

Examples of suitable fatty amine derivatives are the above-mentioned secondary or tertiary fatty amines or diamines of which at least one alkyl substituent has been replaced by a substituent selected from the group consisting of substituents comprising an aromatic group, such as a benzyl group; hydroxylated alkyl groups, such as a hydroxyethyl group; polyoxyethylene groups; aminoalkyl groups; and carboxylated alkyl groups such as a carboxymethyl group. A preferred example of a tertiary fatty amine derivative is tallowbis(2-hydroxyethyl)amine.

As described before, the iron salt and the one or more fatty amines or fatty amine derivatives are preferably added to the return activated sludge before it is contacted with a new influent, to mixed liquor suspended solids in the aeration tank, to wastewater to be treated (so prior to the contacting step with micro-organisms), to a settling tank or any combination thereof. Addition to the return sludge is preferred, because then the iron salt and the one or more fatty amines or fatty amine derivatives are brought into contact with the activated sludge (suspended solids) in the highest concentration possible. The least preferred option is addition to the settling tank, since in that case a high percentage of the iron salt and fatty amine(s) or fatty amine derivative(s) will be lost.

The amount of iron which is used is typically calculated on the basis of the phosphate concentration in the wastewater to be treated. Preferably, the amount of iron salt used is such that the iron to phosphate molar ratio is between 0.1 to 20, more preferably 0.3 to 10, and most preferably 0.5 to 3. The total amount of fatty amine(s) and/or fatty amine derivative(s) is preferably such that the weight ratio of the iron salt to fatty amine(s) and/or fatty amine derivative(s) (i.e. the weight amount of iron salt divided by the weight amount of fatty amine (derivative)) is in the range of 1 to 450, more preferably in the range of 3 to 300.

The iron(II) or iron(III) salt and the one or more fatty amines, fatty amine derivatives or a combination thereof according to the present invention may be dosed at one or more of the above-mentioned stages of the process in any conventional manner. The iron salt may be added pure or in an aqueous solution. It may be added in a continuous manner or intermittently. The fatty amine(s) and/or fatty amine derivative(s) can be added in a pure form, as an emulsion, as a suspension or as solution in an organic solvent. Said organic solvent can obviously consist of a mixture of organic solvents. If the fatty amine(s) or fatty amine derivative(s) are water-soluble, they can also be added in an aqueous solution. It is also possible to add the fatty amine(s) or fatty amine derivative(s) in the form of an aqueous micellar system, by addition of non-ionic, cationic, amfoteric, or, although this is less preferred, anionic surfactants. The fatty amine(s) or fatty amine derivative(s) can be added in a continuous manner or intermittently, either together with the iron salt or separately. It is noted that it is possible to add the iron salt at a different stage of the process than the fatty amine(s) or fatty amine derivatives(s). However, it is preferred to add them at the same stage of the process, and preferably even as closely together as possible.

In a particularly preferred embodiment, the iron(II) or iron(III) salt and the one or more fatty amines or fatty amine derivatives are pre-mixed to form a bulking sludge reducing composition before being dosed to the wastewater because, surprisingly, it has been found that if the iron salt and the one or more fatty amines or fatty amine (derivatives) are added in the form of a macroscopically homogeneous mixture, the efficiency is increased even more.

An additional object of the present invention is therefore to provide a composition comprising an iron(II) or iron(III) salt and one or more fatty amines or fatty amine derivatives which is readily usable in activated sludge wastewater treatment plants for reducing bulking sludge.

The objective has been met by providing compositions comprising an iron salt selected from the group consisting of FeCl₃, FeCl₂, FeCl(SO₄), Fe(NO₃), and Fe(NO₃)₃, and at least one fatty amine or fatty amine derivative. Preferably, the composition comprises
- between 30 and 45 wt% of the Fe(II) or Fe(III) salt, and more preferably between 35 and 40 wt% of the Fe(II) or Fe(III) salt, based on the total weight of the composition;
- between 0.1 and 10 wt% of one or more fatty amines, one or more fatty amine derivatives, or a combination thereof, and more preferably between 0.5 and 5 wt% of one or more fatty amines, one or more fatty amine derivatives, or a combination thereof, based on the total weight of the composition;
- between 35 and 70 wt% of water, and more preferably between 30 and 60 wt% of water, based on the total weight of the composition;
- between 0.01 and 15 wt% of one or more organic solvents, and more preferably between 0.1 and 7 wt% of one or more organic solvents, based on the total weight of the composition; and
- between 0 and 10 wt% of one or more additives, and more preferably at most 5 wt% of one or more additives, based on the total weight of the composition.

From an economic point of view, preferably the lowest possible quantity of organic solvent and additives is used to meet the objective, i.e. to make a composition wherein the fatty amine(s) or fatty amine derivative(s) have been made compatible with the iron salt which is dissolved in water.

The present invention also provides a concentrated pre-mix, i.e. a composition comprising an iron salt and at least one fatty amine or fatty amine derivative which is concentrated in fatty amine (derivative). An advantage of this pre-mix is that it gives flexibility. It can for example be diluted with the required amount of iron(II) or iron(III) salt. It is also possible to add the additional iron (II) or iron(III) salt separately either continuously or intermittently. The pre-mix can also be used *as such* in case of excessive bulking sludge. Preferably, a pre-mix according to the present invention comprises
- between 10 and 30 wt% of the iron(II) or iron(III) salt, and more preferably between 15 and 25 wt% of the iron(II) or iron(III) salt, based on the total weight of the composition;
- between 10 and 30 wt% of one or more fatty amines, one or more fatty amine derivatives, or a combination thereof, and more preferably between 15 and 25 wt% of one or more fatty amines, one or more fatty amine derivatives, or a combination thereof, based on the total weight of the composition;
- between 10 and 70 wt% of water, and more preferably between 20 and 35 wt% of water, based on the total weight of the composition;
- between 5 and 45 wt% of one or more organic solvents, and more preferably between 10 and 25 wt% of one or more organic solvents, based on the total weight of the composition; and
- between 0 and 10 wt% of one or more additives, and more preferably at most 5 wt% of one or more additives, based on the total weight of the composition.

The organic solvent is generally a solvent in which the Fe(II) or Fe(III) salt and the fatty amine(s) and/or fatty amine derivative(s) will dissolve or in which these components are readily dispersible. Preferably, said organic solvent has a δ(p) of at least 8, a δ(d) of at most 19, and a δ(h) of between 6 and 26. δ(p), δ(d), and δ(h) are also known as Hansen solubility parameters. More information can be found in Allan Barton, CRC Handbook of Solubility Parameters and Other Cohesion Parameters, 2nd Edition, A.F.M. Barton, 1991, Chapters 5.9 - 5.11.

Preferably, the organic solvent of the invention is either a single organic compound or a mixture of organic compounds. The organic compound is a liquid which comprises at least one -XR group with X being O or S, at least one -NR₂ group, or any combination thereof, with R being hydrogen or a substituent comprising from 1 to 20 carbon atoms. The R-group may contain one or more heteroatoms like O, N, or S. More preferably, the organic compound is selected from the group consisting of alcohols, esters, ethers, carboxylic acids, thioethers, ketones, and aldehydes. For economic feasibility, most preferably the organic compound is mainly composed of an alcohol. Suitable examples of alcohols include methanol, ethanol, (iso-)propanol, (iso-)butanol, glycol, propylene glycol, butylene glycol, and glycerol.

Additives that can be used in the compositions according to the present invention are compounds having the following Hansen solubility parameters: a δ(p) of at least 8, a δ(d) of at most 19, and a δ(h) of between 6 and 26. Preferably, for sake of costs, the additive is an alcohol.

As mentioned above, an iron(III) salt is preferred, and most preferably FeCl₃ is used. Examples of suitable fatty amines or fatty amine derivatives are also mentioned above. A preferred composition comprises a combination of FeCl₃ and cocoamine (Armeen® C ex AkzoNobel Surface Chemistry) or tallowamine (Armeen® T ex AkzoNobel Surface Chemistry).

The bulking sludge reducing composition comprising the iron(II) or iron(III) salt and one or more fatty amines or fatty amine derivatives which is readily usable in activated sludge wastewater treatment plants for reducing bulking sludge can be prepared by mixing the components in a conventional manner, optionally using ultrasonic equipment and/or heating. Preferably, however, a mixture of fatty amine(s) and/or fatty amine derivative(s) is prepared in an organic solvent, optionally with additives, after which an aqueous solution of the iron(II) or iron(III) salt is added with stirring.

The process according to the present invention is further illustrated by the following non-limiting examples.

### EXAMPLES

The activated sludge and wastewater used in the Examples were collected from the wastewater treatment plant (WWTP) Nieuwgraaf in Duiven, The Netherlands. The WWTP Nieuwgraaf is an activated sludge plant treating predominantly domestic wastewater. The primary settled wastewater was collected weekly and stored at -20°C until required.

The experiments were performed in lab-scale sequencing batch reactors (SBR) with working volumes of 150 mL at a temperature of 20 ± 2 °C. These reactors were operated with a fill and react time of 8 hours, a react time of 14 to 15 hours, and a settle time of 1 to 2 hours, and a draw period (for the effluent) of a few minutes. More particularly, 150 mL of activated sludge containing approximately 3 g/L dry weight of suspended solids was used to inoculate the sequencing batch reactors. The activated sludge was allowed to settle during 1 to 2 hours. 100 mL of clarified effluent was drawn from the reactor. Subsequently, 100 mL of domestic wastewater still to be treated was added to the SBR, said domestic wastewater containing 1 g/L of milk powder (coffee creamer ex Landhof). This operation procedure stimulated excessive growth of filamentous bacteria. The growth of filamentous bacteria resulted in bulking sludge.

### Example 1 and Comparative Examples A-C

A combination of ferric chloride (40% aqueous solution of FeCl₃ ex AkzoNobel Base Chemicals in HCl) and tallowbis(2-hydroxyethyl)amine (Ethomeen® T12 ex AkzoNobel Surface Chemistry) was used to control bulking sludge (Example 1). The results were compared to the results of using only tallowbis(2-hydroxyethyl)amine as additive (Comparative Example A), using only FeCl₃ as additive (Comparative Example B), and a control test wherein no additive was used (Comparative Example C).

The following procedure was followed. A clear aqueous solution of tallowbis(2-hydroxyethyl)amine in a concentration of 5 g/L was made by adding hydrochloric acid (pH <1) and heating to 40°C under continuous stirring. Part of this solution was mixed with a FeCl₃ solution. Both solutions were diluted approximately 10 times, giving solutions which could be administered conveniently in the SBRs. The clear tallowbis(2-hydroxyethyl)amine solutions with and without FeCl₃ became homogenous suspensions upon cooling to 20°C while stirring. All the suspensions were maintained at room temperature under continuous stirring.

The effect of daily dosages of tallowbis(2-hydroxyethyl)amine and FeCl₃ on filamentous bacteria was assessed by measuring the sludge volume index and through microscopic observations. The performance of the reactors was assessed by determining the removal of chemical oxygen demand from the wastewater.

The additive (being a combination of ferric chloride and tallowbis(2-hydroxyethyl)amine (Example 1), tallowbis(2-hydroxyethyl)amine only (Comparative Example A), FeCl₃ only (Comparative Example B), and no additive (Comparative Example C)) was added to the settled sludge (the sludge remaining in the respective reactors after withdrawal of the treated water). Subsequently, the addition of 100 ml domestic wastewater spiked with 1 g/L of milk powder was started. The SBRs were operated as described above. The sludge retention time in the SBR units was set at 30 days by removing 5 mL of suspended solids prior to settling. The hydraulic retention time was 36 hours. Supernatant drawn off was analysed for the chemical oxygen demand (COD).

In the SBR unit of Example 1, tallowbis(2-hydroxyethyl)amine and FeCl₃ were added daily (i.e. one dose per 24 hours) in dosages giving 4.5 mg/L tallowbis(2-hydroxyethyl)amine in wastewater. The SBR unit of Comparative Example A was fed with tallowbis(2-hydroxyethyl)amine (4.5 mg/L; concentration in wastewater). The SBR unit of Comparative Example B was fed with FeCl₃ solution (39 mg/L; concentration in wastewater). The SBR of Comparative Example C received neither FeCl₃ nor tallowbis(2-hydroxyethyl)amine.

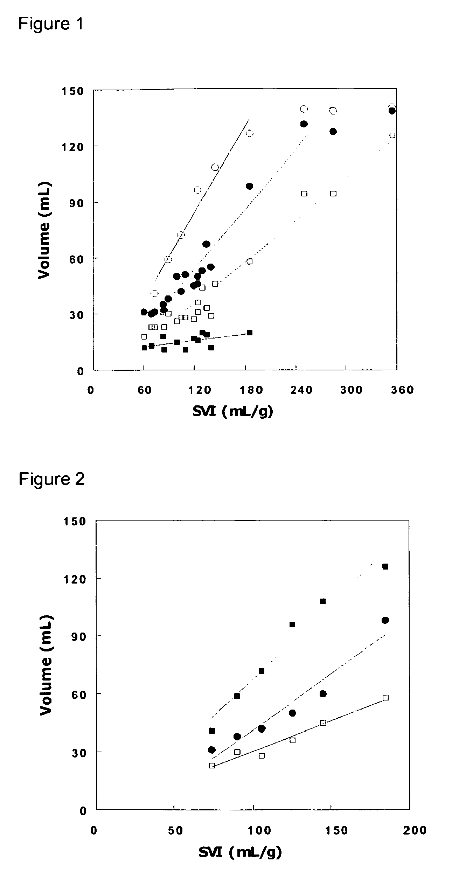

The dry weight (DW) of the activated sludge was determined by filtering 50 ml of the activated sludge over a preweighed 12 µm Schleicher and Schüll filter. This filter was dried for 2 hours at 104°C and weighed after cooling. DW was calculated by subtracting the weighed filter and dividing the difference by the filtered volume. During the test activated sludge samples of 5 ml were taken to determine the dry weight. The sludge volume index (SVI) was measured by assessing the volume in milliliters occupied by one gram of activated sludge after settling for 30 minutes in a 1 L calibrated cylinder. Alternatively, the settability of the sludge was measured directly in the SBRs. In the SBR the settability was determined at various time intervals. The volume occupied by the sludge in the SBR was related to the SVI measured in 1 L calibrated cylinders. Volumes obtained in the SBR with activated sludge with various SVIs are given in Figures 1 and 2 (see Figure 1: Sludge volumes in SBRs with a working volume of 150 mL after a sedimentation period of 45 minutes. The sludge concentrations in the SBR were 1.0 (δ), 2.0 (δ), 3.0 (δ), and 4.0 (δ) g/L dry weight; and Figure 2: Volumes in SBRs with a working volume of 150 mL after a sedimentation period of 30 minutes. The sludge concentrations in the SBR were 2.0 (δ), 3.0 (δ), and 4.0 (δ) g/L dry weight). When the sludge concentration is known, these Figures can be used to relate a volume determined during the settling period of the SBR to the SVI of the sludge.

The pH of the supernatant liquors was determined with a Knick 765 calimatic pH meter (Elektronische Messgerate GmbH, Berlin, Germany).

Before analyzing the COD, the effluents of the SBR units were filtered using Schleicher and Schüll (cellulose nitrate) filters with pores of 8.0 µm to remove sludge particles. The chemical oxygen demand (COD) of the influent and the effluent was determined by oxidation with an acid-dichromate mixture in which Cr⁶⁺ was reduced to Cr³⁺ using Hach Lange test kits (LCK 114 and 314). The reaction vials were sealed and placed in a heating block and the contents heated at a temperature of 148°C for two hours. The spectrophotometer (Xion 500) and heating block used were obtained from Hach Lange, Düsseldorf, Germany.

Photographs of the activated sludge were taken with a Zeiss Axioplan 2 microscope and a Jenoptik Jena Progres C10^{plus} camera (Carl Zeiss b.v. Sliedrecht, the Netherlands). The filament index (FI) was determined by comparing the microscopic image of the sludge with a series of reference photographs given by Eikelboom in Process control of activated sludge plants by microscopic investigation (2000), pages 45-47.

After 27 days an increase in filamentous micro-organisms was observed in the SBR unit of Comparative Example C, the SBR unit of Comparative Example B, and the SBR unit of Comparative Example A. It was found that dosing tallowbis(2-hydroxyethyl)amine and FeCl₃ at dosages of 4.5 mg/L wastewater (daily additions) prevented excessive growth of the filamentous bacteria after 27 days of operation. This shows that the administration of tallowbis(2-hydroxyethyl)amine with FeCl₃ is effective.

The increase in the numbers of filamentous bacteria resulted in a deteriorated settability of the sludge (SVI 200 - >300) (Table 1). The SVI of the reactor of Example 1 was 100. The Filamentous Index (FI) is in line with the SVI (Table 1). The dry weight varied from 2 to 3 g/L and the pH of the effluent ranged from 6.1 - 7.2. These conditions allow a normal performance of the activated sludge process. The addition according to Example 1 did not have a negative effect on the performance of the wastewater treatment. This is shown by the unaffected COD removals of 97%.

**Table 1 Sludge Volume Index and Filamentous Index in SBRs measured after 27 days of operation.**

| **Example** | **Additive** | **SVI (mL/g)** | **FI** * |
|---|---|---|---|
| **1** | Daily additions of tallowbis(2-hydroxyethyl)amine (4.5 mg/L wastewater) plus FeCl₃ (39 mg/L) | 100 | 0 |
| **A** | Daily additions of tallowbis(2-hydroxethyl)amine (4.5 mg/L wastewater) | 200 | 3 |
| **B** | Daily addition of FeCl₃ (39 mg/L wastewater) | 200 | 5 |
| **C** | Control | >300 | 5 |

| | | | |
|---|---|---|---|
| * The filamentous index is a measure of the number of filamentous micro-organisms in activated sludge. A scale of 0 to 5 is used (from none to very many filaments). | | | |

In conclusion, the bulking sludge can be controlled with tallowbis(2-hydroxyethyl)amine and FeCl₃. Neither dosing of tallowbis(2-hydroxyethyl)amine without FeCl₃ nor dosing of FeCl₃ alone retarded the growth of filamentous bacteria. The performance of the wastewater treatment was not negatively affected by the addition of tallowbis(2-hydroxyethyl)amine plus FeCl₃.

### Example 2 and Comparative Examples D-F

A combination of ferric chloride (40% aqueous solution of FeCl₃ ex AkzoNobel Base Chemicals) and tallowamine (Armeen® T ex AkzoNobel Surface Chemistry) was used to control the bulking sludge. The results were compared to the results of using only tallowamine as additive (Comparative Example D), using only FeCl₃ as additive (Comparative Example E), and a control test wherein no additive was used (Comparative Example F). The experiments were performed in the same manner as described above in detail for Example 1 and Comparative Examples A-C, respectively.

A clear aqueous solution of tallowamine in a concentration of 5 g/L was made by adding hydrochloric acid (pH <1) and heating to 40°C under continuous stirring. Part of this solution was mixed with a FeCl₃ solution. Both solutions were diluted approximately 10 times, giving solutions which could be administered conveniently in the SBRs. The clear tallowamine solutions with and without FeCl₃ became homogenous suspensions upon cooling to 20°C while stirring. All the suspensions were maintained at room temperature under continuous stirring.

In the SBR unit of Example 2, tallowamine and FeCl₃ were added daily in dosages giving 4.5 mg/L tallowamine in wastewater. The SBR unit of Comparative Example D was fed with tallowamine (4.5 mg/L; concentration in wastewater). The SBR unit of Comparative Example E was fed with FeCl₃ solution (39 mg/L; concentration in wastewater). The SBR unit of Comparative Example F did not receive any additive.

After 15 days an increase in filamentous micro-organisms was observed in the SBR unit of Comparative Example E and the SBR unit of Comparative Example D. Dosing tallowamine and FeCl₃ at dosages of 4.5 mg/L wastewater (daily additions) prevented excessive growth of the filamentous bacteria after 15 days of operation. This shows that the administration of tallowamine and FeCl₃ is effective.

The increase in the numbers of filamentous bacteria resulted in a deteriorated settability of the sludge (SVI 200 - >300) (Table 2). The SVI of the reactor dosed with tallowamine with FeCl₃ was 100. The Filamentous Index (FI) is in line with the SVI (Table 2).

The dry weight varied from 2 to 3 g/L and the pH of the effluent ranged from 6.5 - 7.4. These conditions allow a normal performance of the activated sludge process. The addition of tallowamine and FeCl₃ did not have a negative effect on the performance of the wastewater treatment. This is shown by the unaffected COD removals of 97%.

**Table 2 Sludge Volume Index and Filamentous Index in SBRs measured after 15 days of operation.**

| **Example** | **SBR** | **SVI (mL/g)** | **FI** * |
|---|---|---|---|
| **2** | Daily additions of tallowamine (4.5 mg/L wastewater) plus FeCl₃ (39 mg/L) | 100 | 0 |
| **D** | Daily additions of tallowamine (4.5 mg/L wastewater) | 200 | 5 |
| **E** | Daily addition of FeCl₃ (39 mg/L wastewater) | 200 | 4 |
| **F** | Control | >300 | 5 |

| | | | |
|---|---|---|---|
| * The filamentous index is a measure of the number of filamentous micro-organisms in activated sludge. A scale of 0 to 5 is used (from none to very many filaments). | | | |

In conclusion, the bulking sludge can be controlled with tallowamine and FeCl₃. Neither dosing of tallowamine without FeCl₃ nor dosing FeCl₃ alone retarded the growth of filamentous bacteria. The performance of the wastewater treatment was not negatively affected by the addition of tallowamine plus FeCl₃.

### Example 3 and Comparative Examples G-I

A combination of ferric chloride (40% aqueous solution of FeCl₃ ex AkzoNobel Base Chemicals) and cocoamine (Armeen® C ex AkzoNobel Surface Chemistry) was used to control bulking sludge. The results were compared to the results of using only cocoamine as additive (Comparative Example G), using only FeCl₃ as additive (Comparative Example H), and a control test wherein no additive was used (Comparative Example I). The experiments were performed in the same manner as described above in detail for Example 1 and Comparative Examples A-C, respectively.

A clear aqueous solution of cocoamine in a concentration of 5 g/L was made by adding hydrochloric acid (pH <1) and heating to 40°C under continuous stirring. Part of this solution was mixed with a FeCl₃ solution. Both solutions were diluted approximately 4 times, giving solutions which could be administered conveniently in the SBRs. Upon cooling to 20°C the cocoamine solutions with and without FeCl₃ stayed clear. All the solutions were maintained at room temperature under continuous stirring.

In the SBR unit of Example 3, cocoamine and FeCl₃ were added daily in dosages giving 13.5 mg/L cocoamine in wastewater. The SBR unit of Comparative Example G was fed with cocoamine (13.5 mg/L; concentration in wastewater). The SBR unit of Comparative Example H was fed with FeCl₃ solution (20 mg/L; concentration in wastewater). The SBR unit of Comparative Example I did not receive any additive.

After 17 days an increase in filamentous micro-organisms was observed in the SBR unit of Comparative Example H and the SBR unit of Example G. Dosing cocoamine and FeCl₃ in dosages of 13.5 mg/L wastewater (daily additions) prevented excessive growth of the filamentous bacteria after 17 days of operation. This shows that the administration of cocoamine with FeCl₃ is effective.

The increase in the numbers of filamentous bacteria resulted in a deteriorated settability of the sludge (SVI 200 - >300) (Table 3). The SVI of the reactor dosed with cocoamine with FeCl₃ was 120. The Filamentous Index (FI) is in line with the SVI (Table 3).

The dry weight varied from 2 to 3 g/L and the pH of the effluent ranged from 6.5 - 7.2. These conditions allow a normal performance of the activated sludge process. The addition of cocoamine and FeCl₃ did not have a negative effect on the performance of the wastewater treatment. This is shown by the unaffected COD removals of 98%.

**Table 3 Sludge Volume Index and Filamentous Index in SBRs measured after 17 days of operation.**

| **Example** | **SBR** | **SVI (ml/g)** | **FI** * |
|---|---|---|---|
| **3** | Daily additions of cocoamine (13.5 mg/L wastewater) plus FeCl₃ | 120 | 1 |
| **G** | Daily additions of cocoamine (13.5 mg/L wastewater) | 200 | 3 |
| **H** | Daily addition of FeCl₃ (20 mg/L wastewater) | > 300 | 5 |
| **I** | Control | >300 | 5 |

| | | | |
|---|---|---|---|
| * The filamentous index is a measure of the number of filamentous micro-organisms in activated sludge. A scale of 0 to 5 is used (from none to very many filaments). | | | |

In conclusion, the bulking sludge can be controlled with cocoamine and FeCl₃. Neither dosing of cocoamine without FeCl₃ nor dosing FeCl₃ retarded the growth of filamentous bacteria. The performance of the wastewater treatment was not negatively affected by the addition of cocoamine and FeCl₃.

### Example 4-6 and Comparative Examples J and K

Tallowbis(2-hydroxyethyl)amine (Ethomeen® T12), cocoamine (Armeen® C), and oleyl-1,3-diaminopropane (Duomeen® O) were received from AkzoNobel Surface Chemistry. Ferric chloride was obtained from AkzoNobel Base Chemicals as a 40% aqueous solution.

The following solutions of fatty amine derivatives and ferric chloride were prepared:
- 0.2 g tallowbis(2-hydroxyethyl)amine (100%) was mixed with 1.4 g ethanol (96%, δ(d) = 15.8, δ(p) = 19.4, and δ(h) = 19.4) and 5 ml of 40% ferric chloride (Example 4).
- 0.2 g coco-amine (100%) was mixed with 0.2 g ethanol (96%, δ(d) = 15.8, δ(p) = 19.4, and δ(h) = 19.4), 0.2 g acetic acid (50%), and 5 ml of 40% ferric chloride (Example 5).
- 0.33 g oleyl-1,3-diaminopropane (100%) was mixed with 0.33 g ethanol (96%, δ(d) = 15.8, δ(p) = 19.4, and δ(h) = 19.4), 0.33 g hydrochloric acid (96%), and 25 ml of 40% ferric chloride (Example 6).

These solutions were prepared and stored at room temperature.

The tallowbis(2-hydroxyethyl)amine, oleyl-1,3-diaminopropane, and coco-amine solutions with FeCl₃ were added daily. The FeCl₃ concentration in the wastewater was comparable with all three solutions. In Comparative Example J, a SBR unit was fed with a FeCl₃ solution only. Comparative Example K was the control experiment, *i.e.* without any additive.

The experiments were performed in the same manner as described above in detail for Example 1 and Comparative Examples A-C.

After 23 days an increase in filamentous micro-organisms was observed in the SBR unit of Comparative Example J and Comparative Example K. Dosing concentrated solutions of tallowbis(2-hydroxyethyl)amine and FeCl₃, coco-amine and FeCl₃ or oleyl-1,3-diaminopropane and FeCl₃ (daily additions) prevented excessive growth of the filamentous bacteria after 23 days of operation. This shows that the administration of concentrated solutions of tallowbis(2-hydroxyethyl)amine, coco-amine or oleyl-1,3-diaminopropane with FeCl₃ is effective.

The concentrated homogenous solutions of coco-amine and FeCl₃ and oleyl-1,3-diaminopropane and FeCl₃ were stored at room temperature and were stable (clear homogenous solutions).

The concentrated mixture of tallowbis(2-hydroxyethyl)amine and FeCl₃ was not stable at room temperature. A clear homogenous solution changed into a two-layered solution and therefore a homogenous suspension (the result of mixing the two-layered system) was added to the SBR unit.

The results obtained with the concentrated homogenous suspension of tallowbis(2-hydroxyethyl)amine and FeCl₃ according to Example 4 and the mixture of tallowbis(2-hydroxyethyl)amine and FeCl₃ according to Example 1 are comparable. The results obtained with concentrated homogenous solutions of coco-amine and oleyl-1,3-diaminopropane and FeCl₃ (Examples 5 and 6, respectively) showed that these fatty amine derivatives were more effective (lower concentrations possible) in controlling the bulking sludge than the solutions which did not contain the additives (solvents) (Table 4).

An increase in the numbers of filamentous bacteria resulted in a deteriorated settability of the sludge (SVI >300) (Table 4). The SVIs of the reactor dosed with tallowbis(2-hydroxyethyl)amine, cocoamine or oleyl-1,3-diaminopropane plus FeCl₃ and additive(s) were 100, 150, and 130 respectively. The Filamentous Indexes (FI) were in line with the SVIs (Table 4).

The dry weight varied from 2 to 3 g/L and the pH of the effluent ranged from 6.0 - 7.6. These conditions allow a normal performance of the activated sludge process. The addition of concentrated homogenous solutions of tallowbis(2-hydroxyethyl)amine plus FeCl₃, coco-amine plus FeCl₃ or oleyl-1,3-diaminopropane plus FeCl₃ did not have a negative effect on the performance of the wastewater treatment. This is shown by the unaffected COD removals of 96 - 98%.

**Table 4 Sludge Volume Index and Filamentous Index measured in SBRs**

| **Example** | **Additive** | **SVI (mL/g)** | **FI** * |
|---|---|---|---|
| **4** | Daily addition of homogenous solution of tallowbis(2-hydroxyethyl)amine and FeCl₃ in ethanol | 100 | 0 |
| **5** | Daily addition of homogenous solution of coco-amine and FeCl₃ in ethanol | 150 | 1 |
| **6** | Daily additions of homogenous solution of oleyl-1,3-diaminopropane and FeCl₃ in ethanol and hydrogen chloride | 130 | 1 |
| **J** | Daily addition of FeCl₃ | >300 | 5 |
| **K** | None | >300 | 4 |

| | | | |
|---|---|---|---|
| * The filamentous index is a measure of the number of filamentous micro-organisms in activated sludge. A scale of 0 to 5 is used (from none to very many filaments). | | | |

Accordingly, the bulking sludge can be effectively controlled with previously prepared, homogenous solutions of tallowbis(2-hydroxyethyl)amine and FeCl₃, coco-amine and FeCl₃ or oleyl-1,3-diaminopropane and FeCl₃.

## Claims

1. Process for reducing the bulking sludge in an activated sludge plant for wastewater treatment wherein an iron(II) or iron(III) salt and at least one fatty amine or fatty amine derivative are used, wherein the fatty amine or fatty amine derivative is selected from the group consisting of mono-, di-, and triamines, secondary dialkylamines, tertiary trialkylamine, tertiary dialkylmethylamines, and tertiary alkyldimethylamines.

2. Process according to claim 1 wherein the iron(II) or iron(III) salt and the at least one fatty amine or fatty amine derivative are added to return activated sludge, to mixed liquor, to wastewater and/or to a settler tank.

3. Process according to claim 1 or 2 wherein the iron salt is selected from the group consisting of FeCl₃, FeCl₂, Fe(SO₄), FeCl(SO₄), Fe(NO₃)₂, and Fe(NO₃)₃.

4. Process according to claim 1 wherein the fatty amine or fatty amine derivative is selected from the group consisting of n-decyl amine, n-dodecyl amine, (coco alkyl)amine, n-tetradecyl amine, n-hexadecyl amine, n-octadecyl amine, oleyl amine, (tallow alkyl)amine, (rapeseed alkyl)amine, (soya alkyl)amine, erucyl amine, (coco alkyl)amine, N-(n-decyl)-trimethylene diamine, N-(n-dodecyl)-trimethylene diamine, N-(coco alkyl)-trimethylene diamine, N-(oleyl alkyl)-trimethylene diamine, N-(rapeseed alkyl)-trimethylene diamine, N-(soya alkyl)-trimethylene diamine, N-(tallow alkyl)-trimethylene diamine, N-erucyl trimethylene diamine, N-(n-decyl)-N'-(3-aminopropyl)-1,3-propane diamine, N-(n-dodecyl)-N'-(3-aminopropyl)-1,3-propane diamine, oleyl-1,3-diaminopropane, N-(coco alkyl)-N'-(3-aminopropyl)-1,3-propane diamine, N-(rapeseed alkyl)-N'-(3-aminopropyl)-1,3-propane diamine, N-(soya alkyl)-N'-(3-aminopropyl)-1,3-propane diamine, N-oleyl-N'-(3-aminopropyl)-1,3-propane diamines, N-(tallow alkyl)-N'-(3-aminopropyl)-1,3-propane diamine, N-erucyl-N'-(3-aminopropyl)-1,3-propane diamine, N-(3-aminopropyl}-N'-[3-(9-decylamino)propyl]-1,3-propane diamine, N-(3-aminopropyl}-N'-[3-(9-dodecylamino)propyl]-1,3-propane diamine, N-(3-aminopropyl)-N'-[3-(9-(coco alkyl)amino)propyl]-1,3-propane diamine, N-(3-aminopropyl)-N'-[3-(9-(rapeseed alkyl)amino)propyl]-1,3-propane diamine, N-(3-aminopropyl)-N' -[3-(9-(soya alkyl)amino)propyl]-1,3-propane diamine, N-(3-aminopropyl)-N'-[3-(9-octadecenylamino)propyl]-1,3-propane diamine, N-(3-aminopropyl)-N'-[3-(9-(tallow alkyl)amino)propyl]-1,3-propane diamine, N-(3-aminopropyl)-N'-[3-(9-erucylamino)propyl]-1,3-propane diamine, di-n-decylamine, bis(n-decyl)amine, (coco alkyl)-methylemine, tri(coco alkyl)amine, di(coco alkyl)methylamine, (coco alkyl)dimethylamine, and tallowbis(2-hydroxyethyl)amine.

5. Process according to any one of the preceding claims wherein the iron salt and the fatty amine or fatty amine derivative are mixed prior to the addition to the return activated sludge, to mixed liquor, to wastewater and/or to a settler tank.

6. Composition comprising an iron salt selected from the group consisting of FeCl₃, FeCl₂, Fe(SO₄), FeCl(SO₄), Fe(NO₃), and Fe(NO₃)₃ and at least one fatty amine or fatty amine derivative

7. Composition according to claim 6 comprising
(a) between 30 and 45 wt% of an iron(II) or iron(III) salt, based on the total weight of the composition;
(b) between 0.1 and 10 wt% of fatty amine and/or fatty amine derivative, based on the total weight of the composition
(c) between 35 and 70 wt% of water, based on the total weight of the composition,
(d) between 0.01 and 15 wt% of one or more organic solvents, based on the total weight of the composition, and
(e) between 0 and 10 wt% of one or more additives, based on the total weight of the composition,
up to a total of 100 wt%.

8. Composition according to claim 6 in the form of a pre-mix, comprising
(a) between 10 and 30 wt% of the iron(II) or iron(III) salt, and more preferably between 15 and 25 wt% of the iron(II) or iron(III) salt, based on the total weight of the composition;
(b) between 10 and 30 wt% of one or more fatty amines, one or more fatty amine derivatives, or a combination thereof, and more preferably between 15 and 25 wt% of one or more fatty amines, one or more fatty amine derivatives, or a combination thereof, based on the total weight of the composition;
(c) between 10 and 70 wt% of water, and more preferably between 20 and 35 wt% of water, based on the total weight of the composition;
(d) between 5 and 45 wt% of one or more organic solvents, and more preferably between 10 and 25 wt% of one or more organic solvents, based on the total weight of the composition; and
(e) between 0 and 10 wt% of one or more additives, and more preferably at most 5 wt% of one or more additives, based on the total weight of the composition.

9. Composition or pre-mix according to any one of claims 6-8 comprising FeCl₃ and cocoamine or tallowamine.

10. Process to prepare the composition according to claim 6 or 7 or the pre-mix according to claim 9 comprising the steps of preparing a mixture of fatty amine(s) and/or fatty amine derivative(s) in an organic solvent, optionally with the addition of one or more additives, and subsequently adding an aqueous solution of an iron(II) or iron(III) salt with stirring.

11. Use of the composition according to any one of claims 6-9 for reducing the bulking sludge in an activated sludge plant for wastewater treatment.

## Patentansprüche

1. Verfahren zur Verringerung von Schlammansammlungen in einer Belebtschlammanlage zur Abwasserbehandlung, wobei ein Eisen(II)- oder Eisen(III)salz und mindestens ein Fettamin oder Fettäureaminderivat verwendet werden, wobei das Fettamin oder Fettaminderivat aus der Gruppe bestehend aus Mono-, Di-, und Triaminen, sekundären Dialkylaminen, tertiären Trialkylaminen, tertiären Dialkylmethylaminen und tertiären Alkyldimethylaminen ausgewählt ist.

2. Verfahren gemäß Anspruch 1, wobei das Eisen(II)- oder Eisen(III)salz und das mindestens eine Fettamin oder Fettaminderivat zum Rücklaufschlamm, zum Mixed Liquor, zum Abwasser und/oder zu einem Absetzbecken zugegeben werden.

3. Verfahren gemäß Anspruch 1 oder 2, wobei das Eisensalz aus der Gruppe bestehend aus FeCl₃, FeCl₂, Fe(SO₄), FeCl(SO₄), Fe(NO₃)₂ und Fe(NO₃)₃ ausgewählt ist.

4. Verfahren gemäß Anspruch 1, wobei das Fettamin oder Fettaminderivat aus der Gruppe bestehend aus n-Decylamin, n-Dodecylamin, (Cocoalkyl)amin, n-Tetradecylamin, n-Hexadecylamin, n-Octadecylamin, Oleylamin, (Talgalkyl)amin, (Rapsalkyl)amin, (Soyaalkyl)amin, Erucylamin, (Cocoalkyl)amin, N-(n-Decyl)trimethylendiamin, N-(n-**Dodecyl)trimethylendiamin,** N-(Cocoalkyl)trimethylendiamin, N-(Oleylalkyl)trimethylendiamin, N-(Rapsalkyl)trimethylendiamin, N-(Soyaalkyl)trimethylendiamin, N-(Talgalkyl)trimethylendiamin, N-Erucyltrimethylendiamin, N-(n-Decyl)-N'-(3-aminopropyl)-1,3-propandiamin, N-(n-Dodecyl)-N'-(3-aminopropyl)-1,3-propandiamin, Oleyl-1,3-diaminopropan, N-(Cocoalkyl)-N'-(3-aminopropyl)-1,3-propandiamin, N-(Rapsalkyl)-N'-(3-aminopropyl)-1,3-propandiamin, N-(Soyaalkyl)-N'-(3-aminopropyl)-1,3-propandiamin, N-Oleyl-N'-(3-aminopropyl)-1,3-propandiamin, N-(Talgalkyl)-N'-(3-aminopropyl)-1,3-propandiamin, N-Erucyl-N'-(3-aminopropyl)-1,3-**propandiamin,** N-(3-Aminopropyl)-N'-[3-(9-decylamino)propyl]-1,3-**propandiamin,** N-(3-Aminopropyl)-N'-[3-(9-dodecylamino)propyl]-1,3-propandiamin, N-(3-Aminopropyl)-N'-[3-(9-(cocoalkyl)amino)propyl]-1,3-propandiamin, N-(3-Aminopropyl)-N'-[3-(9-(rapsalkyl)amino)propyl]-1,3-**propandiamin,** N-(3-Aminopropyl)-N'-[3-(9-(soyaalkyl)amino)propyl]-1,3-**propandiamin,** N-(3-Aminopropyl)-N'-[3-(9-octadecenylamino)propyl]-1,3-propandiamin, N-(3-Aminopropyl)-N'-[3-(9-(talgalkyl)amino)propyl]-1,3-propandiamin, N-(3-Aminopropyl)-N'-[3-(9-erucylamino)propyl]-1,3-**propandiamin,** D i-n-decylamin, Bis(n-decyl)amin, (Cocoalkyl)methylamin, Tri(cocoalkyl)amin, Di(cocoalkyl)methylamin, (Cocoalkyl)dimethylamin und Talgbis(2-hydroxyethyl)amin ausgewählt ist.

5. Verfahren gemäß einem der vorherigen Ansprüche, wobei das Eisensalz und das Fettamin oder Fettaminderivat vor der Zugabe zum Rücklaufschlamm, zum Mixed Liquor, zum Abwasser und/oder zu einem Absetzbecken gemischt werden.

6. Zusammensetzung, umfassend ein Eisensalz, ausgewählt aus der Gruppe bestehend aus FeCl₃, FeCl₂, Fe(SO₄), FeCl(SO₄), Fe(NO₃) und Fe(NO₃)₃, und mindestens ein Fettamin oder Fettaminderivat, wobei das Fettamin oder Fettaminderivat aus der Gruppe bestehend aus Mono-, Di-, und Triaminen, sekundären Dialkylaminen, tertiären Trialkylaminen, tertiären Dialkylmethylaminen und tertiären Alkyldimethylaminen ausgewählt ist.

7. Zusammensetzung gemäß Anspruch 6, umfassend
(a) zwischen 30 und 45 Gew.-% eines Eisen(II)- oder Eisen(III)salzes, basierend auf dem Gesamtgewicht der Zusammensetzung;
(b) zwischen 0,1 und 10 Gew.-% eines Fettamins und/oder Fettaminderivats, basierend auf dem Gesamtgewicht der Zusammensetzung;
(c) zwischen 35 und 70 Gew.-% an Wasser, basierend auf dem Gesamtgewicht der Zusammensetzung;
(d) zwischen 0,01 und 15 Gew.-% an einem oder mehr organischen Lösungsmitteln, basierend auf dem Gesamtgewicht der Zusammensetzung; und
(e) zwischen 0 und 10 Gew.-% an einem oder mehr Zusatzstoffen, basierend auf dem Gesamtgewicht der Zusammensetzung,
bis zu insgesamt 100 Gew.-%.

8. Zusammensetzung gemäß Anspruch 6, umfassend
(a) zwischen 10 und 30 Gew.-% eines Eisen(II)- oder Eisen(III)salzes, und stärker bevorzugt zwischen 15 und 25 Gew.-% eines Eisen(II)- oder Eisen(III)salzes, basierend auf dem Gesamtgewicht der Zusammensetzung;
(b) zwischen 10 und 30 Gew.-% eines oder mehr Fettaminen, eines oder mehr Fettaminderivaten oder einer Kombination davon, und stärker bevorzugt zwischen 15 und 25 Gew.-% eines oder mehr Fettaminen, eines oder mehr Fettaminderivaten oder eine Kombination davon, basierend auf dem Gesamtgewicht der Zusammensetzung;
(c) zwischen 10 und 70 Gew.-% Wasser, und stärker bevorzugt zwischen 20 und 35 Gew.-% Wasser, basierend auf dem Gesamtgewicht der Zusammensetzung;
(d) zwischen 5 und 45 Gew.-% an einem oder mehr organischen Lösungsmitteln, und stärker bevorzugt zwischen 10 und 25 Gew.-% an einem oder mehr organischen Lösungsmitteln, basierend auf dem Gesamtgewicht der Zusammensetzung; und
(e) zwischen 0 und 10 Gew.-% an einem oder mehr Zusatzstoffen, und stärker bevorzugt höchstens 5 Gew.-% an einem oder mehr Zusatzstoffen, basierend auf dem Gesamtgewicht der Zusammensetzung.

9. Zusammensetzung oder Vormischung gemäß einem der Ansprüche 6 bis 8, die FeCl₃ und Cocoamin oder Talgamin umfasst.

10. Verfahren zur Herstellung der Zusammensetzung gemäß Anspruch 6 oder 7 oder der Vormischung gemäß Anspruch 9, das die Schritte des Herstellens einer Mischung aus (einem) Fettamin(nen) und/oder (einem) Fettaminderivat(en) in einem organischen Lösungsmittel, gegebenenfalls mit der Zugabe von einem oder mehr Zusatzstoffen, und danach Zugeben einer wässrigen Lösung eines Eisen(II)- oder Eisen(III)salzes unter Rühren, umfasst.

11. Verwendung der Zusammensetzung gemäß einem der Ansprüche 6 bis 9 zur Verringerung von Schlammansammlungen in einer Belebtschlammanlage zur Abwasserbehandlung.

## Revendications

1. Procédé de réduction du gonflement des boues dans une installation de boues activées pour le traitement des eaux usées dans lequel un sel de fer(II) ou de fer(III) et au moins une amine grasse ou un dérivé d'amine grasse sont utilisés, dans lequel l'amine grasse ou le dérivé d'amine grasse est choisi dans le groupe constitué par les mono-, di- et triamines, les dialkylamines secondaires, les trialkylamines tertiaires, les dialkylméthylamines tertiaires et les alkyldiméthylamines tertiaires.

2. Procédé selon la revendication 1, dans lequel le sel de fer(II) ou de fer(III) et l'au moins une amine grasse ou un dérivé d'amine grasse sont ajoutés à la boue activée de retour, une liqueur mixte, les eaux usées et/ou une cuve de décantation.

3. Procédé selon la revendication 1 ou 2, dans lequel le sel de fer est choisi dans le groupe constitué par FeCl₃, FeCl₂, Fe(SO₄), FeCl(SO₄), Fe(NO₃)₂ et Fe(NO₃)₃.

4. Procédé selon la revendication 1, dans lequel l'amine grasse ou le dérivé d'amine grasse est choisi dans le groupe constitué par la n-décylamine, la n-dodécylamine, la (cocoalkyl)amine, la n-tétradécyl-amine, la n-hexadécylamine, la n-octadécylamine, l'oléylamine, la (alkyle de suif)amine, la (alkyle de colza)amine, la (alkyle de soja)amine, l'érucylamine, la (cocoalkyl)amine, la N-(n-décyl)-triméthylène diamine, la N-(n-dodécyl)-triméthylène diamine, la N-(cocoalkyl)-triméthylène diamine, la N-(oléylalkyl)-triméthylène diamine, la N-(alkyle de colza)-triméthylène diamine, la N-(alkyle de soja)-triméthylène diamine, la N-(alkyle de suif)-triméthylène diamine, la N-érucyltriméthylène diamine, la N-(n-décyl)-N'-(3-aminopropyl)-1,3-propane diamine, la N-(n-dodécyl)-N'-(3-aminopropyl)-1,3-propane diamine, l'oléyl-1,3-diamino-propane, la N-(cocoalkyl)-N'-(3-aminopropyl)-1,3-propane diamine, la N-(alkyle de colza)-N'-(3-aminopropyl)-1,3-propane diamine, la N-(alkyle de soja)-N'-(3-aminopropyl)-1,3-propane diamine, la N-oléyl-N'-(3-aminopropyl)-1,3-propane diamine, la N-(alkyle de suif)-N'-(3-aminopropyl)-1,3-propane diamine, la N-érucyl-N'-(3-aminopropyl)-1,3-propane diamine, la N-(3-aminopropyl)-N'-[3-(9-décylamino)propyl]-1,3-propane diamine, la N-(3-aminopropyl)-N'-[3-(9-dodécylamino)propyl]-1,3-propane diamine, la N-(3-aminopropyl)-N'-[3-(9-(cocoalkyl)amino)propyl]-1,3-propane diamine, la N-(3-aminopropyl)-N'-[3-(9-(alkyle de colza)amino)propyl]-1,3-propane diamine, la N-(3-aminopropyl)-N'-[3-(9-(alkyle de soja)amino)propyl]-1,3-propane diamine, la N-(3-aminopropyl)-N'-[3-(9-octadécénylamino)propyl]-1,3-propane diamine, la N-(3-aminopropyl)-N'-[3-(9-(alkyle de suif)amino)propyl]-1,3-propane diamine, la N-(3-aminopropyl)-N'-[3-(9-érucylamino)propyl]-1,3-propane diamine, la di-n-décylamine, la bis(n-décyl)-amine, la (cocoalkyl)méthylamine, la tri(cocoalkyl)-amine, la di(cocoalkyl)méthylamine, la (cocoalkyl)-diméthylamine, et la bis(2-hydroxyéthyl)amine de suif.

5. Procédé selon l'une quelconque des revendications précédentes, dans lequel le sel de fer et l'amine grasse ou le dérivé d'amine grasse sont mélangés avant l'ajout à la boue activée de retour, une liqueur mixte, les eaux usées et/ou une cuve de décantation.

6. Composition comprenant un sel de fer choisi dans le groupe constitué par FeCl₃, FeCl₂, Fe(SO₄), FeCl(SO₄), Fe(NO₃) et Fe(NO₃)₃ et au moins une amine grasse ou un dérivé d'amine grasse, dans laquelle l'amine grasse ou le dérivé d'amine grasse est choisi dans le groupe constitué par les mono-, di- et triamines, les dialkylamines secondaires, les trialkylamines tertiaires, les dialkylméthylamines tertiaires et les alkyldiméthylamines tertiaires.

7. Composition selon la revendication 6, comprenant :
(a) entre 30 et 45 % en poids d'un sel de fer(II) ou de fer(III), par rapport au poids total de la composition ;
(b) entre 0,1 et 10 % en poids d'une amine grasse et/ou d'un dérivé d'amine grasse, par rapport au poids total de la composition ;
(c) entre 35 et 70 % en poids d'eau, par rapport au poids total de la composition ;
(d) entre 0,01 et 15 % en poids d'un ou plusieurs solvants organiques, par rapport au poids total de la composition, et
(e) entre 0 et 10 % en poids d'un ou plusieurs additifs, par rapport au poids total de la composition,
jusqu'à un total de 100 % en poids.

8. Composition selon la revendication 6, sous la forme d'un prémélange, comprenant :
(a) entre 10 et 30 % en poids du sel de fer(II) ou de fer(III), et plus préférablement entre 15 et 25 % en poids du sel de fer(II) ou de fer(III), par rapport au poids total de la composition ;
(b) entre 10 et 30 % en poids d'une ou plusieurs amines grasses, d'un ou plusieurs dérivés d'amine grasse, ou d'une combinaison de ceux-ci, et plus préférablement entre 15 et 25 % en poids d'une ou plusieurs amines grasses, d'un ou plusieurs dérivés d'amine grasse, ou d'une combinaison de ceux-ci, par rapport au poids total de la composition ;
(c) entre 10 et 70 % en poids d'eau, et plus préférablement entre 20 et 35 % en poids d'eau, par rapport au poids total de la composition ;
(d) entre 5 et 45 % en poids d'un ou plusieurs solvants organiques, et plus préférablement entre 10 et 25 % en poids d'un ou plusieurs solvants organiques, par rapport au poids total de la composition, et
(e) entre 0 et 10 % en poids d'un ou plusieurs additifs, et plus préférablement au plus 5 % en poids d'un ou plusieurs additifs, par rapport au poids total de la composition.

9. Composition ou prémélange selon l'une quelconque des revendications 6 à 8, comprenant du FeCl₃ et une cocoamine ou une amine de suif.

10. Procédé de préparation de la composition selon la revendication 6 ou 7 ou du prémélange selon la revendication 9 comprenant les étapes de préparation d'un mélange d'une ou plusieurs amines grasses et/ou d'un ou plusieurs dérivés d'amine grasse dans un solvant organique, comprenant facultativement l'ajout d'un ou plusieurs additifs, et par la suite l'ajout d'une solution aqueuse d'un sel de fer(II) ou de fer(III) sous agitation.

11. Utilisation de la composition selon l'une quelconque des revendications 6 à 9 pour réduire le gonflement des boues dans une installation de boues activées pour le traitement des eaux usées.
